# EUROPÄISCHE PATENTSCHRIFT

(11) **EP 0 733 528 B1**
(45) Veröffentlichungstag und Bekanntmachung des Hinweises auf die Patenterteilung: **22.07.1998**
(21) Anmeldenummer: 96104384.1
(22) Anmeldetag: 20.03.1996
(51) Int. Cl.: B60S 3/00

(54) **Vorrichtung zur vollautomatischen Reinigung eines Fahrrades**
Automatic cleaning device for a bicycle
Dispositif pour le nettoyage automatique d'une bicyclette

(30) Priorität: 24.03.1995 DE 29505047 U
(43) Veröffentlichungstag der Anmeldung: 25.09.1996
(73) Patentinhaber: Ostheimer, Thomas, 76131 Karlsruhe (DE); Ostheimer, Tibor, 74821 Mosbach (DE)
(72) Erfinder: Ostheimer, Thomas, 76131 Karlsruhe (DE); Ostheimer, Tibor, 74821 Mosbach (DE)

(56) Entgegenhaltungen:
- DE-U- 9 112 116
- DE-U- 9 208 442
- DE-U-29 506 873

## Beschreibung

Die Erfindung betrifft eine Vorrichtung zur vollautomatischen Reinigung eines Fahrrades. Das Fahrrad wird gereinigt, getrocknet und gepflegt. Derartige Vorrichtungen sind bekannt. In DE 4325973C1 wird eine Vorrichtung beschrieben, in die das Fahrrad zur Reinigung in der Längsachse horizontal eingestellt wird. Beidseitig zum Fahrrad angebrachte, parallel verschiebbar und senkrecht zustellbare rotierende bürstenartige Reinigungswalzen erfüllen den zweigeteilten Reinigungseffekt. Beidseitig angeordnete, verschiebbare Sprühvorrichtungen sorgen ebenfalls für die Reinigung.
Zum Bestücken bzw. Entnehmen des Fahrrades werden die bürstenartigen Reinigungswalzen sowie die Sprüh- und Trocknungseinrichtungen in Längsrichtung verschoben. Dies erfordert einen hohen Raumbedarf, der sich mindestens auf zwei Fahrradlängen erstreckt. Die Breite der Kabine beläuft sich auf mindestens eine Fahrradlänge. Die beidseitig an der Kabine angebrachten Schiebetüren erfordern ebenfalls einen hohen Raumbedarf. Der durch die Konstruktion bedingte Raumbedarf sowie der Aufwand an Schiebe- und Schwenkelementen ist sehr groß und kostenintensiv. Der Geräteraum ist frei zugänglich, so daß unbefugte Manipulationen möglich sind und die Verletzungsgefahr groß ist.
Die rotierend ausgeführten bürstenartigen Reinigungswalzen sind für die Reinigung eines Fahrrades ungeeignet.
Bürstenteile können sich in Fahrradelementen (Kette, Bremsen) einklemmen und diese beschädigen oder zerstören.
Die vertikal angeordneten aber in Längs-richtung verschiebbaren Reinigungswalzen gewährleisten keine zufriedenstellende Entfernung von Schmutzpartikeln; diese werden in Längsrichtung auf dem Fahrrad verteilt. Die Sprüheinrichtung für Reinigung und Trocknung sind ungünstig angeordnet, da diese den Schmutz bzw. das Wasser verteilen und nicht abspülen bzw.wegblasen.
Die großflächig ausgeführte Bodenwanne ist ständig feucht und schmutzig. Dies ist nachteilig, da der Innenraum der Vorrichtung betreten werden muß.

EP 0 222 861 B1 und DE-GM 91 12116 beschreiben Vorrichtungen zum Reinigen von Zweirädern, die allein mit Hilfe von Düsen bzw. Sprüheinrichtungen arbeiten. Diese Verfahren sind zur Reinigung eines Fahrrades nicht geeignet, da festsitzender Schmutz nicht entfernt werden kann und die druckempfindlichen Lager eines Fahrrades beschädigt werden können.
DE-PS 939795 beschreibt eine Fahrrad -Reinigungsmaschine, die mit einer Vielzahl von Einzelbürsten arbeitet. Diese erreichen allerdings nicht jede Stelle des Fahrrades, so daß eine vollständige Reinigung nicht erzielt wird.

Der Erfindung liegt die Aufgabe zugrunde, eine vollautomatische und funktionstüchtige Vorrichtung zur Reinigung von Fahrrädern zu schaffen.

Der Reinigungsvorgang dieser Vorrichtung ist derart konzipiert, daß größtmögliche Sauberkeit innerhalb kürzester Zeit erreicht wird. Es werden bis zu vier Arbeitsschritte durchgeführt. Erster Schritt ist die Vorwäsche ohne Reinigungsmittel. Dies dient zum Einweichen und Löslichmachen von Schmutz. Danach erfolgt das Aufbringen von Reinigungsmittel, das Schmutz sowie Fette und Öle löst. Die mechanische Reinigung erfolgt mittels Reinigungsbürsten, die Pendelbewegungen ausführen. Dies ist vorteilhaft, da kurzhubige Bewegungen der Borsten den Schmutz gut lösen und die Gefahr von Beschädigungen ausschließen. Zum Schluß werden die gelösten Schmutzpartikel abgespült. Alle Schritte laufen derart ab, daß der jeweilige Arbeitsgang von oben nach unten ausgeführt wird. Dies vorteilhaft, da die Schmutzpartikel nach unten abgetragen und vom Fahrrad entfernt werden.
Um das Fahrrad sofort nach der Reinigung in Betrieb nehmen zu können, wird das Restwasser mittels Druckluft abgeblasen. Entscheidend für die "Trocknung" ist nicht die Temperatur der Luft sondern, die Intensität des Luftstromes. Je größer diese ist, desto größer ist der Schereffekt, der die Wassertropfen vom Fahrrad trennt.
Auch dieser Vorgang wird von oben nach unten ausgeführt.
Somit wird das Wasser wirkungsvoll entfernt.
Zum Zweck der Umweltverträglichkeit und zum Ausschließen von Verletzungsrisiken verläuft die Reinigung und Trocknung in einer geschlossenen Kabine, die aus platzsparenden Gründen mit einer Drehtüre versehen ist.

Die Betätigung der Drehtüre erfolgt entweder halb- oder vollautomatisch. In der halbautomatischen Ausführung erfolgt das Öffnen nach Beendigung der Reinigung/Trocknung von Hand. Im geöffneten Zustand wird die Türe automatisch arretiert. Zeitgesteuert wird die Türe automatisch mit einem Feder-Dämpfer-Element nach Entnahme des Fahrrades geschlossen. In diesem Zustand wird die Tür ebenfalls arretiert, um Unbefugten keinen Zutritt zu ermöglichen.
Die vollautomatische Ausführung der Drehtüre sieht eine Betätigung mittels eines Motors vor. Die Arretierung erfolgt wie oben beschrieben.
Aufgrund der Bedienfreundlichkeit, des Raumbedarfs und der Wirksamkeit des Reinigungs- und Trocknungsvorgangs ist das Fahrrad vorteilhaft senkrecht aufgehängt. Mittels eines schwenkbaren Hebelarmes zur Aufnahme des Vorderrades werden zwei Funktionen erfüllt. Das Einbringen des Fahrrades in die Kabine erfolgt mit geringstem Kraftaufwand durch Unterstützung der Hebelwirkung mittels eines Feder-Dämpfer-Elementes. Dieses ist derart beschaffen, daß es größtmögliche Kraft mit verzögerter Beschleunigung verbindet und somit einfache und verletzungsfreie Handhabung gewährleistet. Durch das Herausschwenken des Hebelarmes aus der Kabine ist ein Betreten des Innenraumes nicht notwendig. Dies ist vorteilhaft, da unbefugte Manipulationen und Verletzungsrisiken minimiert werden.
Zur Reinigung des Fahrrades dient ein Schlitten, der vertikal verschiebbar angeordnet ist. An diesem sind mit Schwenkarmen versehene Reinigungsbürsten angebracht.
Dadurch können die Reinigungsbürsten ein- oder ausgeklappt werden. Dies wird über zwei Auflaufkeile am unteren Ende der Führungsschiene erzielt. Je nach Bedarf werden die Hebelarme mit den Reinigungsbürsten arretiert oder schwenken beim Hochfahren des Schlittens automatisch mit Hilfe eines Feder-Dämpfer-Elementes in die Reinigungsposition. Die Reinigungsbürsten führen durch einen exzentrischen Antrieb eine Pendelbewegung durch.
Dies ist vorteilhaft, da Fahrradelemente nicht beschädigt oder zerstört werden und ein hoher Reinigungseffekt erzielt wird. Die Schwenkvorrichtung mit Reinigungsbürsten ist beidseitig des Fahrrades vorgesehen, um eine vollständige Reinigung zu gewährleisten.

Zwei Düsensysteme dienen zum Aufbringen von Wasser, Reinigungsmittel und Luft auf das Fahrrad. Die Düsen sind beidseitig angeordnet. Ihre Strahlrichtung ist schräg nach unten vorgesehen. Dies ist vorteilhaft, da Schmutz und Wasser nach unten abgespült bzw. abgeblasen werden.
Der Wasserkreislauf sieht eine Rückgewinnung des Wassers der Vor- und Nachwäsche vor. Dies ist vorteilhaft, da somit der Wasserverbrauch reduziert wird.
Umweltverträglichkeit ist desweiteren durch Filterelemente und Ölabscheider gewährleistet. Der Vorratsbehälter für Reinigungsmittel ist so beschaffen, daß Servicearbeiten in großen Zeitabständen durchgeführt werden können.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig.1:: eine Vorderansicht der Kabine
- Fig.2:: eine Seitenansicht der Kabine
- Fig.3:: eine Draufsicht der Kabine
- Fig.4:: der Aufbau der Kabine
- Fig.5:: den Türmechanismus halbautomatische Ausführung
- Fig.6:: den Türmechanismus vollautomatische Ausführung
- Fig.7a + 7b:: das Fahrwerk der Reinigungseinheit und den Pendelmechanismus der Reinigungsbürsten
- Fig.8:: den Bürstenmechanismus
- Fig.9:: das Düsensystem zur Aufbringung von Wasser, Reinigungsmittel und Luft auf das Fahrrad
- Fig.10:: das Wasser- und Reinigungsmittelversorgungssystem

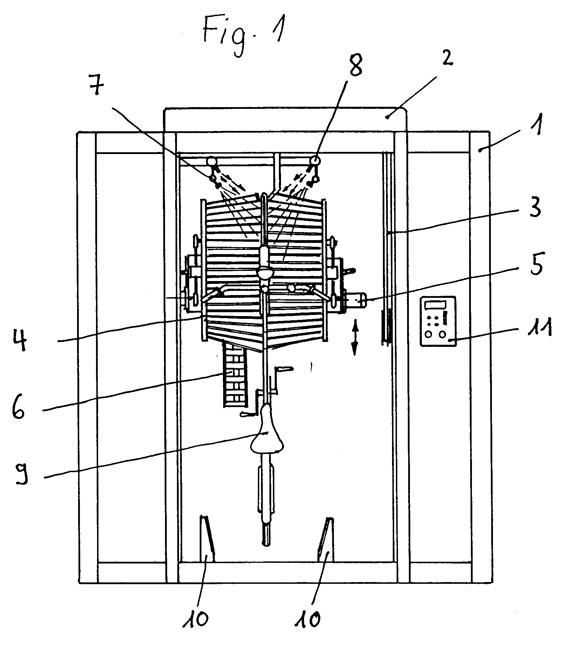

Fig.1 zeigt eine Kabine (1), auf deren Deckel ein Werbeelement (2) montiert ist. Mit einem Hebemechanismus (3) wird das Fahrrad (9) in die Kabine gehoben. Rechts und links vom Fahrrad (9) befinden sich Reinigungsbürsten (4), die eine pendelnde Bewegung ausführen. Diese wird mit Hilfe eines Antriebsmechanismus (5) erzeugt. Das Düsensystem (7,8) sorgt für die Zufuhr von Wasser, Reinigungsmittel und Luft. Eine Energieführungskette (6) führt die Zuleitungen bei der vertikalen Bewegung der Reinigungseinheit geschützt vor mechanischer Beschädigung.

Die Auflaufkeile (10) sorgen für die Schwenkbewegung der Hebelarme der Reinigungsbürsten. Die Steuerungs-, Bedienungs- und Kassiereinheit (11) setzt den Reinigungsvorgang in Bewegung und steuert den Ablauf.

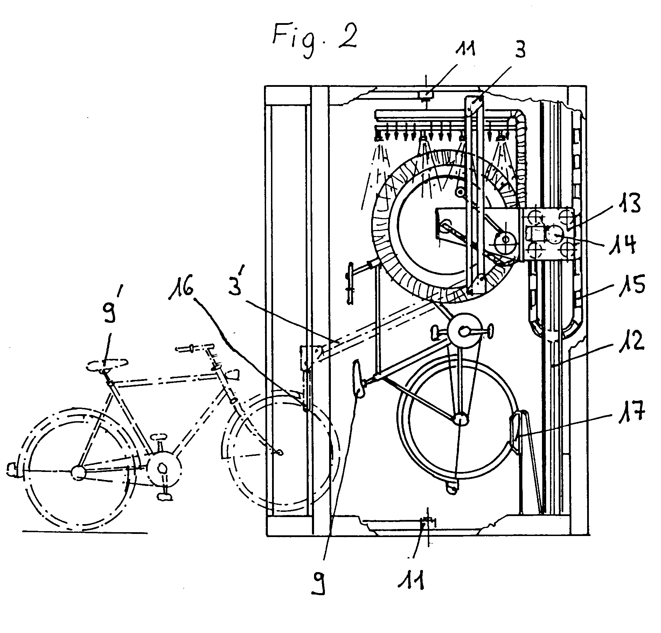

Fig.2 zeigt eine Seitenansicht der Kabine. Das Lager (11) ist der Drehpunkt für die Drehtüre. Die Führungsschiene (12) nimmt den Schlitten (13) auf, der über einen Motor (14) angetrieben wird. Die Leitungsführungskette (6) nimmt die Leitungen der Wascheinheit auf. Das Fahrrad (9') wird in den Aufnahmehaken (16) eingehängt. Die Hebevorrichtung (3') wird in Position (3) gebracht. Das Fahrrad (9) hängt vertikal in der Kabine. Ein Bügel (17) arretiert das Fahrrad.

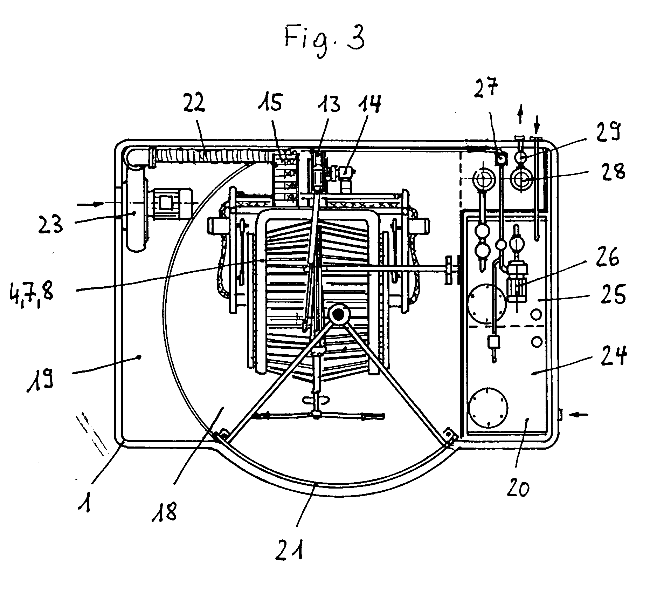

Fig.3 zeigt eine Kabine (1), die in drei Räume aufgeteilt ist. Die Geräteräume (19,20) dienen zur Aufnahme der elektrischen Geräte sowie der Wasser- und Reinigungsmittelversorgungseinheit. In der Naßzelle (18) wird der Reinigungsvorgang automatisch durchgeführt.
Diese ist durch eine abgedichtete, drehbar gelagerte, Tür (21) zugänglich. Das Bürsten- und Düsensystem (4,7,8) ist auf dem Fahrwerk (13) angebracht und wird durch einen Getriebemotor (14) verschoben. Eine Leitungsführungskette nimmt Luft- (22), Wasser- sowie Reinigungsmittelzuleitungen auf. Das Gebläse (23) erzeugt den Luftstrom zur Trocknung des Fahrrades. Die Behälter (24,25) dienen zur Aufnahme von Wasser und Reinigungsmittel. Eine Pumpe (26) dient zur Förderung der verschiedenen Medien. Ein Ventil (27) dient zur Steuerung der Fördermenge sowie der Einleitung der Medien in das entsprechende Leitungssystem. Die Pumpe ermöglicht eine Wasserrückgewinnung aus dem Reinigungsvorgang. Die Pumpe (28) fördert das Abwasser über eine Filtereinheit (29) mit Ölabscheider ins Abwassernetz.

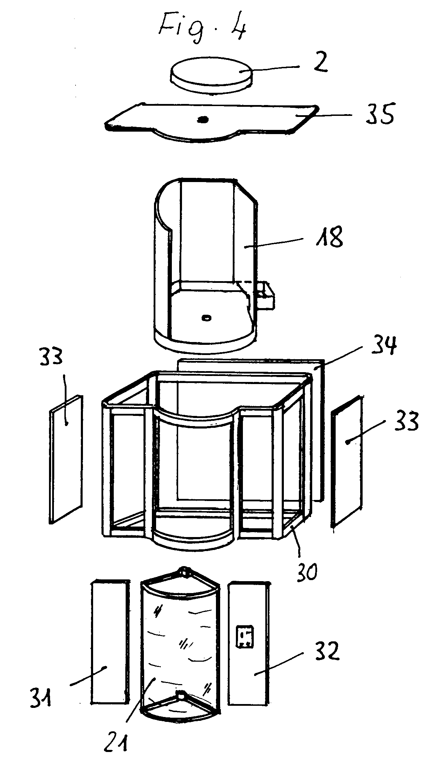

Fig.4 zeigt den Aufbau der Kabine. Diese besitzt als Gestell (30) eine Rahmenkonstruktion in Leichtbauweise.
Im Baukastensystem ausgeführt, wird eine unkomplizierte Montage gewährleistet. Zur Verkleidung dienen die Frontwände (31,32), die Seitenwände (33) und die Rückwand (34). Diese können wahlweise wärmeisoliert ausgeführt sein, um Funktionssicherheit bei jeder Witterung zu gewährleisten.

Die Naßzelle (18) mit der drehbar gelagerten sowie wahlweise durchsichtigen Tür bilden einen von der Umwelt abgetrennten Reinigungsraum. Die Abdeckung (35) verschließt die Kabine nach oben. Die Abbildung (2) zeigt eine Ausführung eines Werbeträgers, der auch als Anzeigeelement für den Prozeßablauf verwendet werden kann.

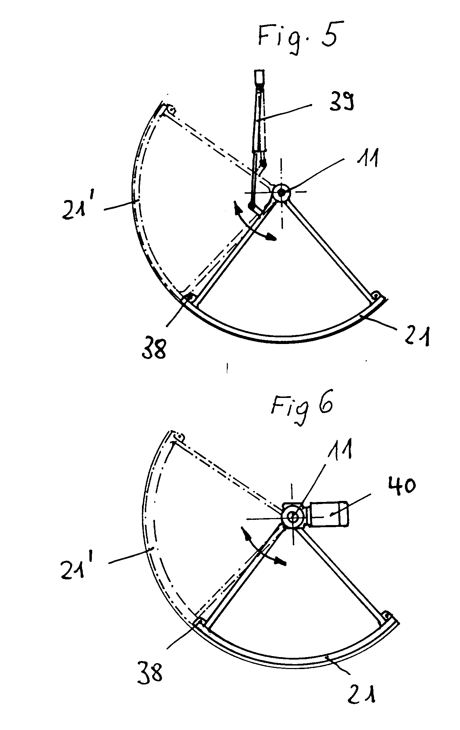

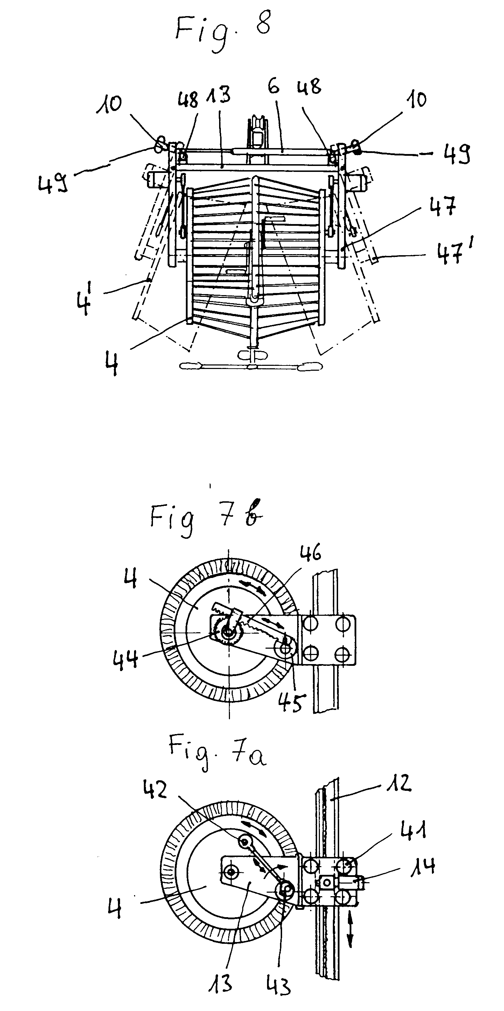

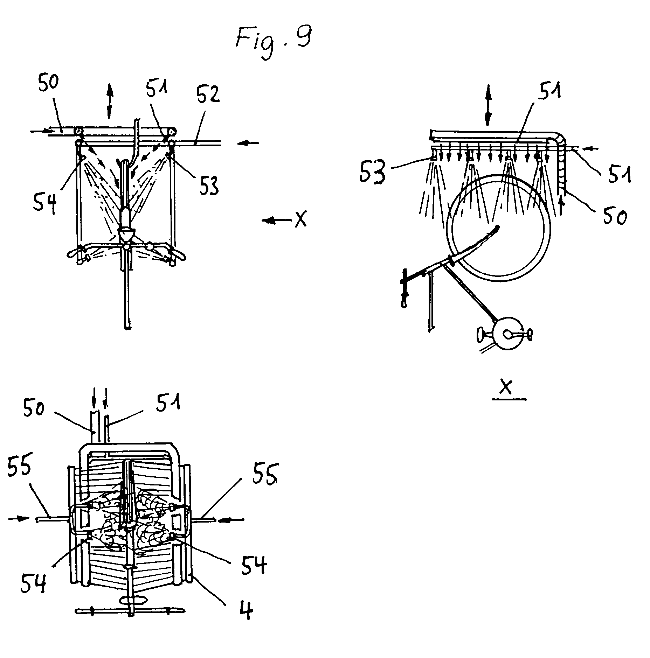

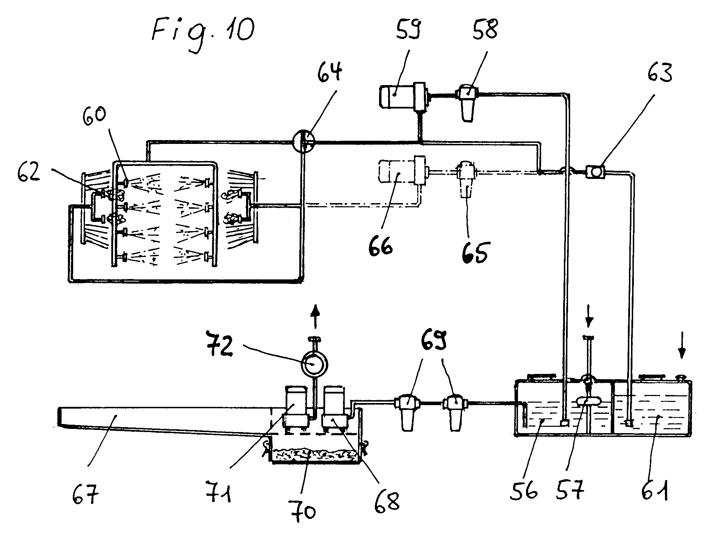

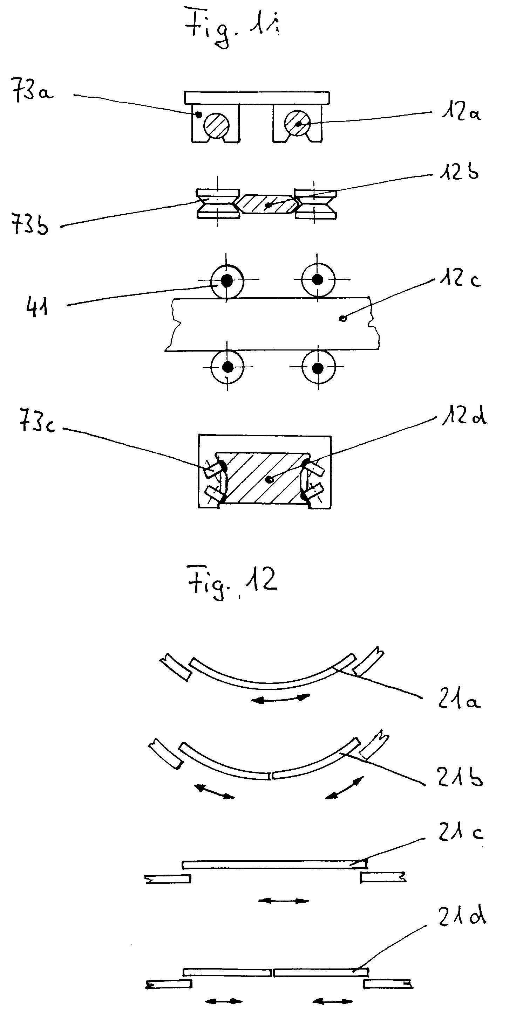

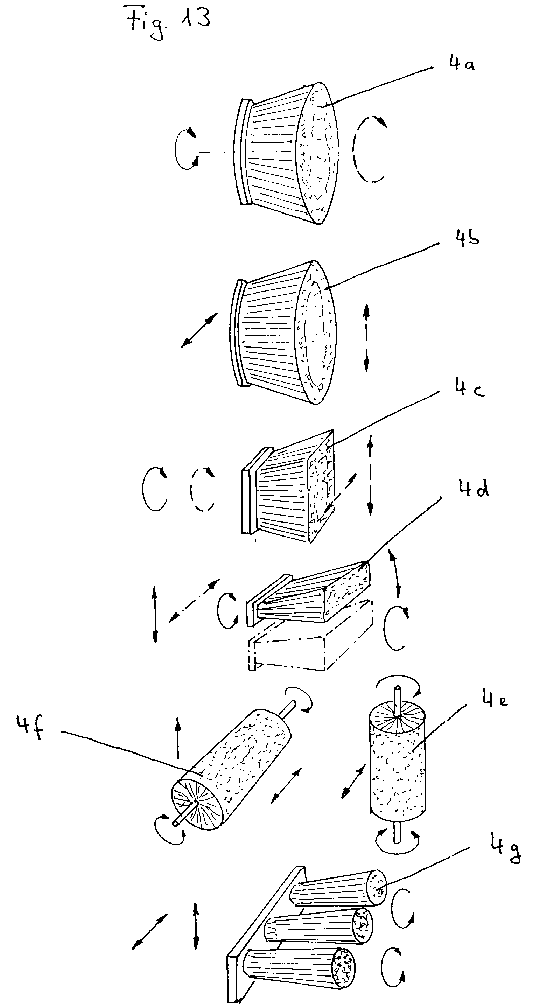

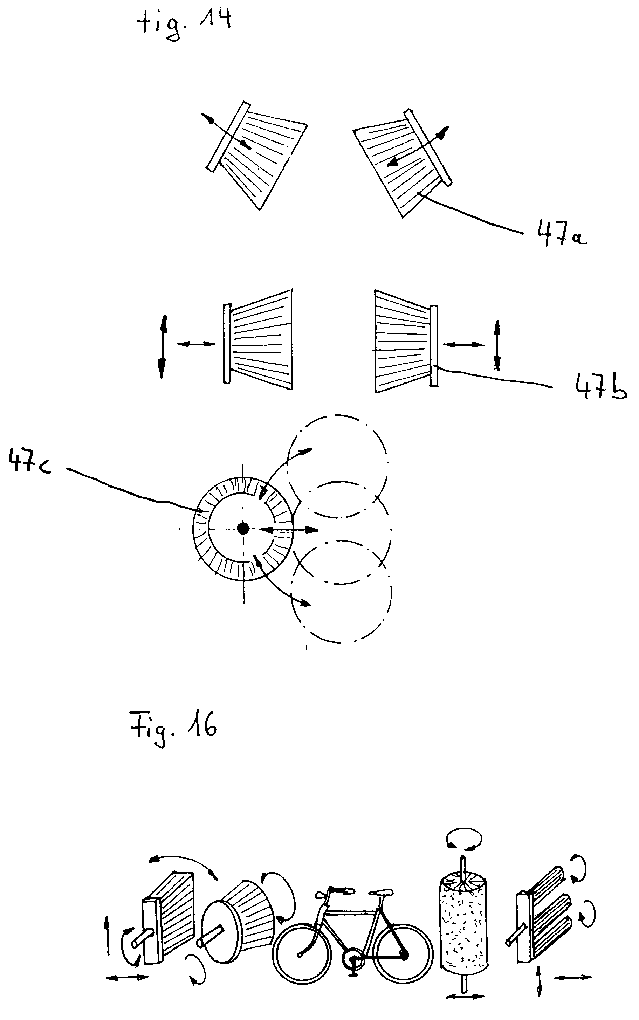

Fig.5 zeigt den Türmechanismus in halbautomatischer Ausrührung. Zum Öffnen der Kabine wird die Tür (21), in der Lagerstelle (11) drehbar gelagert, in die Position (21), gebracht. Ein automatisch ausgelöste Arretierung (38) hält die Tür in dieser Position. Zeitgesteuert löst sich die Arretierung, ein Federelement (39) bringt die Tür in die Ausgangsposition zurück. Hier wird sie ebenfalls arretiert.

Fig.6 zeigt den Türmechanismus in automatischer Ausführung. Zum Öffnen der Kabine wird die Tür (21), in der Lagerstelle (11) drehbar gelagert, mittels eines Motors (40) in die Position (21) gebracht. Eine automatisch ausgelöste Arretierung (38) hält die Tür in dieser Position. Zeitgesteuert löst sich die Arretierung, der Motor bringt die Tür in die Ausgangsposition zurück. Hier wird sie ebenfalls arretiert.

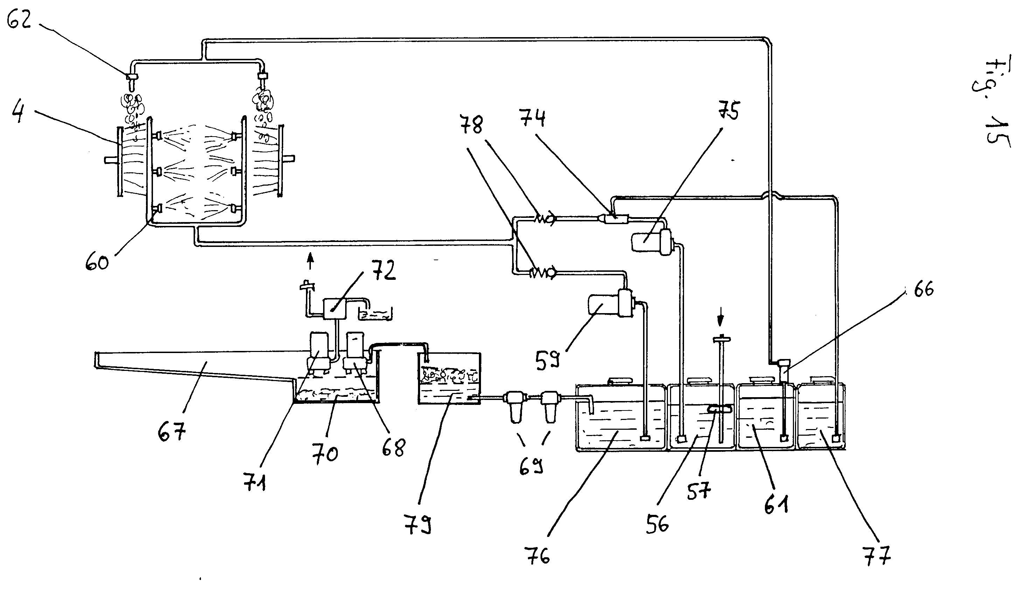

Fig.7a zeigt eine senkrecht angeordnete Führungsschiene (12). Mittels zustellbarer Laufrollen (41) wird der Schlitten (13) spielfrei geführt. Der Motor (14) dient zum automatischen Verfahren des Schlittens. Die Pendelbewegung der Reinigungsbürste (4) wird durch einen drehbar gelagerten, exzentrisch angetriebenen, Pendel (42) erzeugt. Dies geschieht durch einen Motor (43).

Fig.7b zeigt eine Reinigungsbürste (4), die mittels eines Zahnrades (44) und einer, durch eine Exzenterscheibe (45) angetriebene Zahnstange (46), eine Pendelbewegung durchgeführt.

Fig.8 zeigt den Schlitten (13), an dem die Schwenkarme (47) gelenkig in der Lagerstelle (48) angebracht sind. An den Schwenkarmen sind die Reinigungsbürsten (4) angebracht. Mittels eines Auflaufkeiles (10) werden die Schwenkarme und Bürsten in Position (4) bzw. (47) gebracht und je nach Bedarf automatisch durch eine Arretierung (49) in dieser Stellung gehalten.
Fig.9 zeigt verschiedene Ansichten des Düsensystems. Das u-förmig angeordnete Rohrsystem (50) mit den Düsen (51) dient zum Abblasen des Fahrrades mit Druckluft zum Zweck der Trocknung. Zur Aufbringung von Wasser dient das Rohrsystem (52) mit Düsen (53). Die Düsen (51,53) sind derart angeordnet, daß ihre Hauptstrahlrichtung nach unten gerichtet ist. Die Düsen (54) zur Aufbringung des Reinigungsmittels befinden sich innerhalb der Reinigungsbürsten (4). Mittels einer flexiblen Zuleitung (55) werden die Düsen versorgt.

Fig. 10 zeigt einen Wassertank (56) , der mittels eines Schwimmers (57) mit Frischwasser befüllt wird. Über eine Filter (58) fördert die Wasserpumpe (59) die Flüssigkeit zum Düsensystem (60). Der Reinigungsmitteltank (61) versorgt das Düsensystem (62) mit Flüssigkeit. Die Förderung erfolgt entweder über einen Zumischer (63) über Filter (58) und Wasserpumpe (59) mit Umschaltung eines Ventils (64) oder über ein separates Leitungssystem mit Filter (65) und Pumpe (66) direkt ins Düsensystem (62).
Bei der zweiten Ausführung entfällt der Zumischer (63) und das Ventil (64). Das Wasser der Vor- und Nachwäsche gelangt über die Auffangwanne (67) zu der Tauchpumpe (68). Diese fördert das Wasser über eine selbstreinigende Filteranlage (69) in den Tank (56). Der Auffangbehälter (70) dient zur Aufnahme von grobkörnigem Schmutz. Das Wasser der Hauptwäsche wird mit einer Tauchpumpe (71) über einen Filter (72) mit Ölabscheider ins Abwassersystem eingeleitet.

Weitere Ausführungsvarianten einzelner Baugruppen der Erfindung zeigen nachfolgende Zeichnungen:
- Fig.11:: Führungsschienen
- Fig.12:: Türvarianten
- Fig.13:: Bürstenvarianten und Bewgungsmöglichkeiten
- Fig.14:: Schwenkarmbewegungen
- Fig.15:: Versorgungssystem
- Fig.16:: Horizontale Ausführung

Fig.11 zeigt verschiedene Varianten in der Ausführung der vertikalen Führung des Reinigungsschlittens. Die Rundstange (12a) dient als Führung für den gleit- oder kugelgelagerten Gleitschlitten (73a).
Das Profil der Führungsschiene (12b) kann derart ausgebildet sein, daß die gleit- oder kugelgelagerten Rollen spielfrei in beliebiger Richtung geführt sind.
Die Rollen (41) können derart angebracht sein, daß sie spielfrei zur Führungsschiene (12c) zustellbar sind.
Die Führungsschiene (12d) kann derart ausgebildet sein, daß sie in den Reib- oder Laufflächen mit speziellen Elementen versehen ist, um einen reibungsarmen und leisen Lauf der Lagerelemente (73C) zu gewährleisten.

Fig.12 zeigt verschiedene Ausführungen der Türe.
Die Tür (21a) kann als einteilige Drehtür wahlweise mit zentralem Lager oder gelagert in einer Führungsschiene ausgeführt sein.
Die Tür (21b) kann als zweiteilige Drehtüre wahlweise mit zentralem Lager oder gelagert in einer Führungsschiene ausgeführt sein.
Die Tür kann wahlweise als einteilige (21c) oder zweiteilige (21d) Tür ausgeführt sein.

Fig.13 teigt verschiedene Varianten in der Gestaltung und der Bewegungsmöglichkeiten der Reinigungsbürsten.
Die Bürste (4a) kann vorzugsweise eine pendelnde oder eine rotierende Bewegung senkrecht zur Fahrradebene durchführen.
Die Bürste (4b) kann eine Schiebebewegung parallel zur Fahrradhoch-, zur Fahradlängsachse oder Kombinationen der Bewegungen durchführen.
Die Bürste (4c) kann eine Kombination von Pendel/Rotationsbewegung und Schiebebewegung durchführen.
Die Bürsten (4d) können segmentweise zusammengesetzt und die oben benannten Bewegungen durchführen. Wahlweise kann eine zusätzliche Pendelbewegung um die Senkrechte zur Fahrradebene durchgeführt werden.
Die Bürste (4e) kann eine Pendel- oder Rotationsbe-wegung parallel zur Fahrradlängsachse durchführen und wahlweise gleichzeitig verschoben werden.

Die Bürste (4f) kann eine Pendel- oder Rotationsbewegung parallel zur Fahrradhochachse durchführen und kann wahlweise zusätzlich parallel zur Fahrradhoch-, Fahrradlängsachse oder eine Kombination aus beiden Richtungen verschoben werden.
Die Bürste (4g) kann aus einzeln rotierenden oder pendelnden Bürstensegmenten zusammengesetzt sein und wahlweise zusätzlich eine Schiebebewegung parallel zur Fahrradhoch-, Fahrradlängsachse oder kombiniert durchführen.

Fig.14 zeigt verschiedene Bewegungsmöglichkeiten der Schwenkarme.
Der Schwenkarm (47a) kann vom Fahrrad seitlich zu- oder weggeschwenkt werden.
Der Schwenkarm (47b) kann parallel oder senkrecht oder kombiniert zur Fahrradebene verschoben werden.
Der Schwenkarm kann parallel zur Fahrradebene geschwenkt werden.

Fig.15 zeigt eine weitergehende Ausführung des Versorgungssystems.
Das Funktionsprinzip des in Fig.10 dargestellten Versorgungssystems bleibt erhalten. Hinzugefügt werden wahlweise ein Vorratstank (77) für Nachbehandlungschemikalien zur Konservierung und/oder Versiegelung des Fahrrades. Über einen Injektor (74) mit nachgeschaltetem Rückschlagventil (78) werden dem Frischwasser entsprechende Chemikalien beigemischt. Eine zusätzliche Frischwasserfördereinheit ermöglicht den Leitungsnetzunabhängigen Einsatz.
Ein zusätzlicher Rückgewinnungsbehälter (76), dem zur bereits bestehenden Filtereinheit eine Grobfiltereinheit (79) vorgeschaltet ist, ermöglicht die Wiederverwendung von bereits benutztem Wasser.

Fig.16 zeigt in Fig.13 dargestellten Bürstenvarianten und Bewegungsmölichkeiten beim Einsatz des Fahrrades in horizontaler Lage.

## Patentansprüche

1. Vorrichtung zum Reinigen und Trocknen eines Fahrrades (9) mit einer Kabine (1) in einer Rahmen-konstruktion im Baukastenprinzip und Leichtbauweise, wobei ein Gestell (30) vorgesehen ist, das Abdeckungen (31, 32, 33, 34, 35) und eine Tür (21) aufweist und in das so gebildete Gehäuse eine abgeschlossene Naßzelle (18) eingesetzt ist, die ein Bürsten- und Düsensystem (4, 7, 8) in vertikaler Richtung verschiebbar aufnimmt, wobei das Bürsten-und Düsensystem (4, 7, 8) an ein Rohrsystem zum Zuführen von Wasser, Reinigungs- und Konservierungsmitteln sowie Luft angeschlossen ist.

2. Vorrichtung nach Anspruch 1, dadurch gekennzeichnet, daß an der Kabine (1) ein Werbeträger (2), der zusätzlich als Anzeigeelement für den Reinigungsprozeßablauf ausgebildet ist, vorzugsweise auf der Abdeckung (35) montiert ist.

3. Vorrichtung nach Anspruch 1 und 2, dadurch gekennzeichnet, daß die Tür (21) an der Kabine (1) an vertikal übereinander angeordneten Lagern (11) drehbar angeordnet ist und mittels eines Federelementes verschließbar ist.

4. Vorrichtung nach Anspruch 3, dadurch gekennzeichnet, daß zum Verschwenken der Tür (21) ein Antriebsmotor (40) vorgesehen ist und die Tür (21) in den Endstellungen arretierbar ist.

5. Vorrichtung nach einem der Ansprüche 1 bis 4, dadurch gekennzeichnet, daß die Tür (21) als ein- oder zweiteilige Schiebetür, die von Hand, elektromotorisch, pneumatisch oder hydraulisch betätigbar und arretierbar ist, ausgebildet ist.

6. Vorrichtung nach einem der Ansprüche 1 bis 5, dadurch gekennzeichnet, daß die Reinigungseinheit (4, 7, 8) an einem vertikal verfahrbaren Schlitten (13) angebracht ist.

7. Vorrichtung nach Anspruch 6, dadurch gekennzeichnet, daß der Schlitten (13) an Schienen (12) geführt ist und zustellbare Laufrollen und/oder kugelgelagerte oder gleitgelagerte Gleitschlitten aufweist.

8. Vorrichtung nach einem der Ansprüche 1 bis 7, dadurch gekennzeichnet, daß der Schlitten (13) mittels eines Motors (14) angtrieben über eine Zahnstange und Zahnrad, eine Kette und Kettenräder, einen Zahn-/Keilriemen und Scheibe, oder ein Seil und Seilrollen verfahrbar ist.

9. Vorrichtung nach einem der Ansprüche 1 bis 8, dadurch gekennzeichnet, daß das Fahrrad (9) an einer Hebevorrichtung (3) in vertikaler Position in der Naßzelle (18) gehaltert ist.

10. Vorrichtung nach einem der Ansprüche 1 bis 9, dadurch gekennzeichnet, daß die Reinigungsbürsten (4) an Armen (47) am Schlitten (13) angeordnet sind, deren Bewegung verschiebbar oder verschwenkbar ist und die elektromotorisch, pneumatisch, hydraulisch oder mechanisch antreibbar sind mit einer Arretierung (49) in der gewünschten Position.

11. Vorrichtung nach einem der Ansprüche 1 bis 10, dadurch gekennzeichnet, daß die Hebelarme (47) an einem oder mehreren starren Lagern (48), Schiebelagern oder Drehlagern angeordnet sind.

12. Vorrichtung nach einem der Ansprüche 1 bis 11, dadurch gekennzeichnet, daß die Bürsten (4) zu beiden Seiten des Fahrrades (9) angeordnet sind und auf einer kreisförmig oder segmentartig besetzten Scheibe montiert sind, die eine kreisförmige oder pendelnde Bewegung mit zur Fahrradebene senkrechter Achse aufweist.

13. Vorrichtung nach einem der Ansprüche 1 bis 12, dadurch gekennzeichnet, daß zum Erzeugen der Pendelbewegung ein exzentrisch gelagertes Pendel (42), Zahnstange (46) oder Pneumatik- oder Hydraulikzylinder vorgesehen ist.

14. Vorrichtung nach einem der Ansprüche 1 bis 13, dadurch gekennzeichnet, daß die Bürsten (4) eine Bewegung parallel zur Fahrradlängs- oder -querachse oder eine Kombination beider Bewegungen ausführen.

15. Vorrichtung nach einem der Ansprüche 1 bis 14, dadurch gekennzeichnet, daß als Bürsten (4) Walzenbürsten vorgesehen sind, deren Rotationsachse parallel zur Fahrradhoch- oder -längsachse verläuft.

16. Vorrichtung nach einem der Ansprüche 1 bis 15, dadurch gekennzeichnet, daß das Düsensystem (60, 62) beidseitig zum Fahrrad angeordnet ist und eine Hauptstrahlrichtung nach unten aufweist.

17. Vorrichtung nach einem der Ansprüche 1 bis 16, dadurch gekennzeichnet, daß das Wasser- und Reinigungsmittel ganz oder teilweise über eine selbstreinigende Filteranlage/Filtereinheit (69, 79) wiederverwendbar ist.

18. Vorrichtung nach einem der Ansprüche 1 bis 17, dadurch gekennzeichnet, daß der Prozeßablauf von einer Bedieneinheit ggfs. mit einer Kassiereinheit steuerbar ist.

## Claims

1. Apparatus for cleaning and drying of a bicycle (9) comprising a cabin (1) formed in a framework-construction using lightweight material and based on a modular system, whereat a frame is provided comprising cover elements (31, 32, 33, 34, 35) and a door (21) and whereat a self-contained wash-cabin (18) is inserted in the housing formed in such a way, the wash-cabin comprising a system of vertically moveable brushes and nozzles (4, 7, 8) connected to a system of pipes supplying water, cleansing agents, conservation agents as well as air.

2. Apparatus according to claim 1, characterised in that a holder for advertisements (2) having also the function of a display element showing the execution of the cleaning process is especially mounted on the cabin (1).

3. Apparatus according to claim 1 and 2, characterised in that the door (21) provided at the cabin (1) is rotatable received by bearings (11) vertically arranged one above the other and that the door (21) ist lockable by the use of a spring element.

4. Apparatus according to claim 3, characterised in that a driving motor (40) is provided for swinging the door (21), and that the door (21) is blockable at its end positions.

5. Apparatus according to one of the claims 1 to 4, characterised in that the door (21) is a one-part or two-part sliding door, which can be actuated and blocked manual, by an electric motor, pneumatically or hydraulically.

6. Apparatus according to one of the claims 1 to 5, characterised in that the cleaning unit (4, 7, 8) is arranged on a vertically moveable carriage (13).

7. Apparatus according to claim 6, characterised in that the carriage (13) is guided on rails (13) and comprises rollers able to be led up and / or ball-beared or slide-beared sliding carriages.

8. Apparatus according to one of the claims 1 to 7, characterised in that the carriage (13) driven by a motor (14) is moveable via a gear shaft and a gear, a chain and chain wheels, a gear-belt / drive-belt and a disc or a rope and ropes guiding rollers.

9. Apparatus according to one of the claims 1 to 8, characterised in that the bicycle (9) is mounted in vertical position in the wash-cabin (18) on a lifting device (3).

10. Apparatus according to one of the claims 1 to 9, characterised in that the cleaning brushes (4) are arranged at the carriage (13) on arms (47), the movement of which is effected by shifting or swinging and the cleaning brushes are driveable by an electric motor or pneumatically, hydraulically or mechanically, whereat the brushes (4) are blockable at a desired position.

11. Apparatus according to one of the claims 1 to 10, characterised in that the lever-arms (47) are received by one or several rigid bearings (48), sliding bearings or rotary bearings.

12. Apparatus according to one of the claims 1 to 11, characterised in that the brushes (4) are mounted circular or like segments on a disc at both sides of the bicycle (9), whereat the axis of the circular or swinging movement of the disc is perpendicular to the plane of the bicycle.

13. Apparatus according to one of the claims 1 to 12, characterised in that an eccentric beared pendulum (42), a gear shaft (46) or pneumatic or hydraulic cylinders are provided for producing the swinging movement.

14. Apparatus according to one of the claims 1 to 13, characterised in that the brushes (4) execute a movement parallel to the longitudinal axis or the transverse axis of the bicycle or a combined movement to both of the axis.

15. Apparatus according to one of the claims 1 to 14, characterised in that the brushes (4) are roller brushes, the axis of rotation of which is parallel to the axis in vertical direction of the bicycle or in longitudinal direction of which.

16. Apparatus according to one of the claims 1 to 15, characterised in that the nozzle system (60,62) is arranged at both sides of the bicycle, whereat the main jet of the nozzle system is directed downwards.

17. Apparatus according to one of the claims 1 to 16, characterised in that the the water and the cleaning agents are entirely or partly reuseable by the use of a filter system or a filter unit (69, 79) which can cleanse itself.

18. Apparatus according to one of the claims 1 to 17, characterised in that the execution of the process is controlable by the use of an operating unit if necessary completed by a cash point unit

## Revendications

1. Installation pour nettoyage et séchage d'une bicyclette (9) sous forme d'une cabine (1) dans une structure à portiques selon la conception par bloc-éléments à construction légère, pour laquelle un socle (30) est prévu avec des revêtements autour (31, 32, 33, 34, 35), et une porte (21), et dans ce boîtier une cellule de mouillage (18) fermée est installée qui contient un système de brosse et de buse (4, 7, 8) mobile verticalement et il est relié à un système de tuyaux pour l'arrivé d'eau, de produits de nettoyage et de conservation, ainsi que d'air.

2. En plus de la revendication n° 1, l'installation se caractérise par un support de publicité (2) installé à la cabine (1), de préférence sur le revêtement (35) qui est prévu également comme élément d'affichage pour l'indication du déroulement du procès de nettoyage.

3. En plus des revendications n° 1 et 2, l'installation se caractérise par une porte (21) qui est installée à la cabine (1) sur des coussinets (11) tourables, rangés verticalement l'un sur l'autre et elle peut être fermée à l'aide d'un élément de ressort.

4. En plus de la revendication n° 3, l'installation se caractérise par un moteur (40) pour pivoter la porte (21) qui peut être bloquée dans sa position finale.

5. En plus des revendications n° 1 à 4, l'installation est caractérisée par la porte (21) sous forme d'une porte coulissante, composée d'une ou de deux parties et qui peut être mise en action et arrêté à la main, par un moteur électronique, par moyen pneumatique ou hydraulique.

6. En plus des revendications n° 1 à 5, l'installation est caractérisée par l'unité de nettoyage (4, 7, 8) qui est fixée à un chariot (13) verticalement mobile.

7. En plus de la revendication n° 6, l'installation se caractérise par le chariot (13) qui est guidé sur un rail (12), et présente des rouleaux de marche réglables et/ou des paliers à billes ou des paliers glissant.

8. En plus des revendications n° 1 à 7, l'installation se caractérise par le chariot (13) qui est activé par un moteur (14), et se déplace à travers d'une crémaillère et une roue d'engrenage, une chaîne et des roues dentées, un courroie denté/trapézoïdale et un disque, ou une corde et une poulie.

9. En plus des revendications n° 1 à 8, l'installation se caractérise par le fait que la bicyclette (9) est tenu par un dispositif de levage (3) en position verticale dans la cellule de mouillage (18).

10. En plus des revendications n° 1 à 9, l'installation se caractérise par des brosses de nettoyage (4) fixées au chariot (13) par l'intermédiaire des bras (47), qui exécutent un mouvement coulissant ou pivotant, et qui sont commandées par un moteur électronique, pneumatique, hydraulique ou mécanique et peuvent être fixées (49) dans la position souhaitée.

11. En plus des revendications n° 1 à 10, l'installation se caractérise par un bras de levier (47) qui est installé sur un ou plusieurs paliers (48) fixes, paliers coulissants ou paliers tournants.

12. En plus des revendications n° 1 à 11, l'installation se caractérise par les brosses (4) qui sont placées des deux côtés de la bicyclette (9) sur un disque en rond ou en segments qui exécutent un mouvement tournant ou pendulaire en direction verticale au plateau de la bicyclette.

13. En plus des revendications n° 1 à 12, l'installation se caractérise par le fait que pour la production d'un mouvement pendulaire, il est prévu une pendule (42) installée d'une façon excentrique, une crémaillère (46) ou un cylindre pneumatique ou hydraulique.

14. En plus des revendications n° 1 à 13, l'installation se caractérise par les brosses (4) qui exécutent un mouvement parallèle au sens de longueur ou à l'axe transversal de la bicyclette ou ils exécutent une combinaison des deux.

15. En plus des revendications n° 1 à 14, l'installation se caractérise par le fait que comme brosse (4) il est prévu des brosses cylindriques, dont l'axe de rotation est parallèle à l'axe de hauteur ou de longueur de la bicyclette.

16. En plus des revendications n° 1 à 15, l'installation se caractérise par le fait que le système de buse (60, 62) est placé des deux côtés de la bicyclette, dont le sens principal de rayon se dirige vers le bas.

17. En plus des revendications n° 1 à 16, l'installation se caractérise par le fait que l'eau et les produits de nettoyage sont entièrement ou partiellement réutilisables par l'intermédiaire d'une installation de filtrage/unité de filtrage autonettoyante (69, 79).

18. En plus des revendications n° 1 à 17, l'installation se caractérise par le fait que le déroulement du procès est maniable par une unité de commande, et le cas échéant par l'intermédiaire d'une unité d'encaissement.
